# EUROPEAN PATENT APPLICATION

(11) **EP 2 815 864 A1**
(43) Date of publication of application: **24.12.2014**
(21) Application number: 13749545.3
(22) Date of filing: 15.02.2013
(51) Int. Cl.: B29C 39/24, B29C 39/10, B29K 105/08

(54) **METHOD FOR MANUFACTURING FIBER-REINFORCED RESIN**

(30) Priority: 15.02.2012 JP 2012030436
(71) Applicant: Toray Industries, Inc., Tokyo, 103-8666 (JP)
(72) Inventor: YAMAMOTO Kohnosuke, Nagoya-shi Aichi 455-8502 (JP); TSUJI Seiji, Nagoya-shi Aichi 455-8502 (JP); KITAGAWA Masashi, Nagoya-shi Aichi 455-8502 (JP)
(74) Representative: Hoefer & Partner
(86) International application number: PCT/JP2013/053698
(87) International publication number: WO 2013/122207

(57) **Abstract**

A method for manufacturing a fiber-reinforced resin in which resin is injected into a reinforcing-fiber substrate placed in a molding die from an injection port opened in a direction facing the surface of the reinforcing-fiber substrate, and the resin is then impregnated into the reinforcing-fiber substrate. The fiber-reinforced resin manufacturing method is characterized in that a space for injected-resin transit passage is formed in the reinforcing-fiber substrate in the molding die by at least partially removing in advance a section of the reinforcing-fiber substrate located directly below the injection port in the thickness direction of the reinforcing-fiber substrate, and the resin injected from the injection port is impregnated into the reinforcing-fiber substrate through the space for injected-resin transit passage. By forming, in advance, the space for injected-resin transit passage at the position of the reinforcing-fiber substrate directly below the injection port, the press down of the surface of the reinforcing-fiber substrate due to the injected resin can be suppressed, and by reducing the resin layer on the surface, the design property of the surface of a molded article can be improved while an excellent productivity is maintained.

## Description

### Technical Field of the Invention

The present invention relates to a method for manufacturing a fiber-reinforced resin (FRP: Fiber-Reinforced Plastic), and specifically, to improvement of a method for manufacturing a fiber-reinforced resin wherein resin is injected from an injection port opened in a direction facing a surface of a reinforcing-fiber substrate, and the resin is then impregnated into the reinforcing-fiber substrate.

### Background Art of the Invention

When a matrix resin for molding of an FRP is impregnated into a reinforcing-fiber substrate placed in a cavity part of a molding die comprising a plurality of dies, in particular, into a reinforcing-fiber substrate having a large surface area, in order to shorten the time for molding, reduce the cost for manufacture, improve the productivity, etc., an RTM (Resin Transfer Molding) employing a so-called multi-point injection method is known wherein resin is injected almost simultaneously from a plurality of injection ports opened in a direction facing the surface of the reinforcing-fiber substrate, and the resin is then impregnated into the reinforcing-fiber substrate, in particular, in the thickness direction thereof (for example, Patent document 1). Further, in order to improve the surface quality of a molded article, although an RTM method wherein a surface layer having a resin distribution medium is provided on at least one surface of a reinforcing-fiber substrate placed in a molding die and resin can be quickly distributed in the plane direction of the surface of the reinforcing-fiber substrate (for example, Patent document 2), and an RTM method wherein a random mat layer is interposed in at least one surface layer part of a reinforcing-fiber substrate so that voids or pinholes are not generated on, in particular, the design surface side to improve the surface quality (for example, Patent document 3), are also known, in these Patent documents 2 and 3, an embodiment for injecting resin from an injection port opened in a direction facing the surface of the reinforcing-fiber substrate is not mentioned at all.

As described above, although there are advantages capable of shortening the time for molding, reducing the cost for manufacture, maintaining the excellent productivity, etc. in the method for injecting resin from an injection port opened in a direction facing the surface of the reinforcing-fiber substrate, in particular, in the multi-point injection method, there are possibilities in the conventional methods that the following problems may occur.

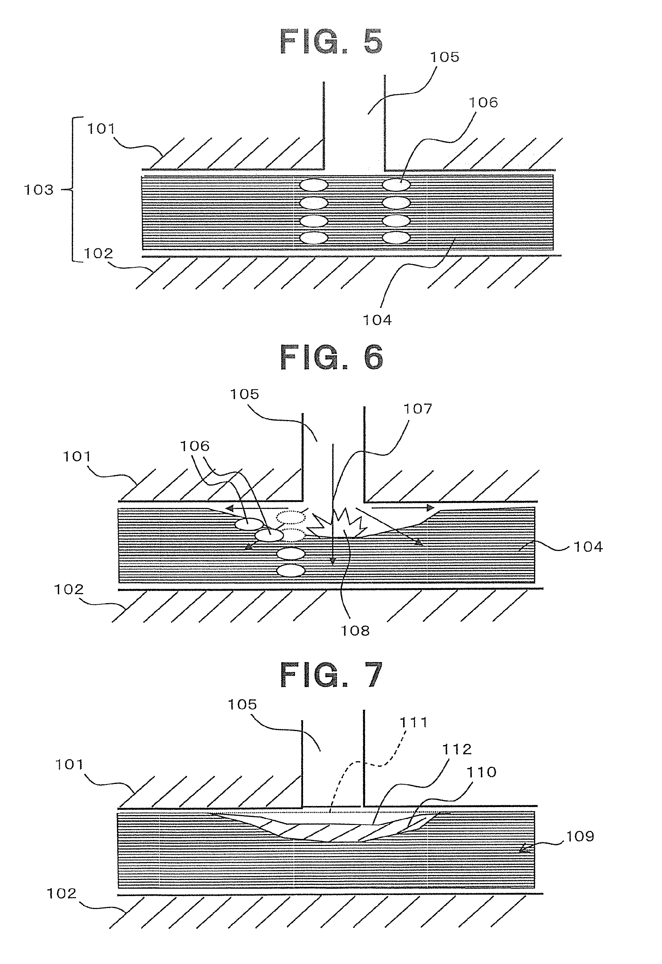

Namely, for example, as shown in Fig. 5, in case where resin is injected into a reinforcing-fiber substrate 104 (for example, a reinforcing-fiber substrate stacked with a plurality of reinforcing-fiber materials) placed in a molding die 103 comprising an upper die 101 and a lower die 102 from an injection port 105 opened in a direction facing the surface of the reinforcing-fiber substrate 104 (symbol 106 exemplifies reinforcing-fiber bundles arranged in a direction perpendicular to the paper plane of the figure), as shown in Fig. 6, by injected resin 107, in particular, by the collision of the injected resin 107 due to the initial flow thereof (108: collision part), the surface layer part of the reinforcing-fiber substrate 104 is pressed down, and there is a case where the surface of the reinforcing-fiber substrate 104 is depressed this surface part is formed as a resin-rich part or a resin-only part. Further, at that time, there is also a possibility that a distortion occurs in the arrangement of the reinforcing-fiber bundles 106 in the surface layer section of the reinforcing-fiber substrate 104. Furthermore, even after completion of the resin injection, for example, as shown in Fig. 7, if there is a layer of only resin 110 in the part forming the surface of a molded article 109 located directly below the above-described injection port 105, there is a possibility that the surface 111 after the completion of the resin injection is depressed by the curing shrinkage of the resin and becomes a surface 112 after the curing shrinkage of the resin, and it deteriorates the design property of the molded article 109. In particular, in a molded article having a large thickness (for example, 1.6 mm or more) or a molded article having a low fiber volume content (for example, 50% or less), because the absolute amount of the resin is great, the depression is liable to become remarkable. Then, in the RTM method using a multi-point injection method, the above-described resin-rich parts due to the press down of the reinforcing-fiber substrate at positions directly below the injection ports are formed many, and they are liable to become sources of deteriorating the design property of the surface.

Further, as another source causing the design property at the position directly below the injection port to be deteriorated, raised is a matter that in the region of a section located directly below the injection port, released from the injection port, or a downstream section thereof, the resin after injection is desired to be cured in order to for a molded article, but in the interior of the injection port, for the purpose of suppressing the curing of the resin and maintaining a smooth flow of the resin to be injected, the resin is controlled at a relatively low temperature, and consequently, the resin temperature at the part directly below the injection port is liable to become low, and therefore, the curing shrinkage is likely to be gathered to this part.

### Prior art documents

### Patent documents

Patent document 1: JP-A-2005-246902
Patent document 2: JP-A-2007-269015
Patent document 3: JP-A-2005-232601

### Summary of the Invention

### Problems to be solved by the Invention

Paying attention to the above-described problems in the conventional methods, an object of the present invention is to provide a method for manufacturing a fiber-reinforced resin wherein, in a method for injecting resin from an injection port opened in a direction facing a surface of a reinforcing-fiber substrate, in particular, in the multi-point injection method, by adding an improvement to the reinforcing-fiber substrate side, the press down of the surface of the reinforcing-fiber substrate due to the injected resin can be suppressed, and the resin layer of the surface can be reduced, thereby improving the design property of the surface of a molded article while maintaining the excellent productivity.

### Means for solving the Problems

To achieve the above-described object, a method for manufacturing a fiber-reinforced resin according to the present invention in which resin is injected into a reinforcing-fiber substrate placed in a molding die from an injection port opened in a direction facing a surface of the reinforcing-fiber substrate, and the resin is then impregnated into the reinforcing-fiber substrate, is characterized in that a space for injected-resin transit passage is formed in the reinforcing-fiber substrate in the molding die by at least partially removing in advance a section of the reinforcing-fiber substrate located directly below the injection port in a thickness direction of the reinforcing-fiber substrate, and the resin injected from the injection port is impregnated into the reinforcing-fiber substrate through the space for injected-resin transit passage. Further, the space part also has an advantage to suppress a sharp pressure elevation immediately after the resin injection and further to adapt the temperature of the resin immediately after being introduced into the molding die to the temperature of the die.

In such a method for manufacturing a fiber-reinforced resin according to the present invention, when the resin is injected from the injection port opened in the direction facing the surface of the reinforcing-fiber substrate, the space for injected-resin transit passage having a form of a hole, etc. is formed by at least partially removing in advance a section of the reinforcing-fiber substrate located directly below the injection port, and the injected resin is impregnated into the reinforcing-fiber substrate through the space for injected-resin transit passage. By the presence of the space for injected-resin transit passage, because the resin having been injected from the injection port is first injected into the space for injected-resin transit passage, and therefrom impregnated into the reinforcing-fiber substrate, the initial collision of the resin immediately after being injected from the injection port against the surface of the reinforcing-fiber substrate disappears, or is relieved, the press down of the surface of the reinforcing-fiber substrate, which had been caused by the collision, is suppressed, the depression of the surface is suppressed, and the resin layer of the surface at this part is relieved. By this relief of the resin layer, the curing shrinkage of the resin can be suppressed. Further, because the depression of the surface is suppressed, the distortion of the arrangement of reinforcing fibers in the surface layer section of the reinforcing-fiber substrate is also suppressed. Furthermore, after the resin is completely charged into the die, because the space for injected-resin transit passage is filled with only the resin material, it becomes a resin supply source when the resin impregnated into peripheral sections of the reinforcing-fiber substrate is cured and shrunk. As a result, the surface quality of an article to be molded can be greatly improved, and the design property can be improved.

Further, in the present invention, although the above-described space for injected-resin transit passage may be formed at least partially in the thickness direction of the reinforcing-fiber substrate, namely, although it may be formed to some extent in depth from the surface of the reinforcing-fiber substrate at the injection port side, it is preferred that it is formed so as to pass through the reinforcing-fiber substrate in the thickness direction. In such a structure, with respect to the resin injected from the injection port, the resin of initial flow during being accelerated does not collide directly with the reinforcing-fiber substrate, and the resin passes through the interior of the space for injected-resin transit passage formed so as to pass through the reinforcing-fiber substrate, and collides with the inner surface of a die provided at a side opposite to a side of a die provided with the injection port. The power of the injected resin is reduced by the collision to the inner surface of the die, and thereafter, the resin is impregnated into the reinforcing-fiber substrate. Therefore, the press down of the surface of the reinforcing-fiber substrate, which had been caused by the initial collision, is further suppressed, the depression of the surface is further suppressed, the resin layer of the surface at this part is further relieved, and the curing shrinkage of the resin can be further suppressed. Further, because the depression of the surface is further suppressed, the distortion of the arrangement of reinforcing fibers in the surface layer section of the reinforcing-fiber substrate is also further suppressed. As a result, the surface quality of an article to be molded can be more greatly improved, and the design property can be more improved.

As the area of the space for injected-resin transit passage in the surface direction of the reinforcing-fiber substrate, both of an embodiment wherein it is equal to the opening area of the injection port toward the interior of the molding die, or more, and an embodiment wherein it is less than the opening area of the injection port toward the interior of the molding, can be employed. It may be appropriately selected in consideration of injection speed of resin from the injection port, degree of influence to each other between adjacent injection port sections in case of multi-point injection, etc.

Further, in the method for manufacturing a fiber-reinforced resin according to the present invention, in particular, in case of employing multi-point injection, a great effect can be expected for improving the design property of a molded article. Namely, the present invention is particularly effective in case opened with a plurality of injection ports, and in that case, relatively to at least one injection port which is considered to be particularly effective, desirably, relatively to a plurality of injection ports, the above-described space for injected-resin transit passage may be formed.

Further, the method for manufacturing a fiber-reinforced resin according to the present invention can also be applied to a case where the above-described reinforcing-fiber substrate comprises a plurality of stacked reinforcing-fiber substrates, and the above-described space for injected-resin transit passage may be formed relatively to the plurality of stacked reinforcing-fiber substrates.

In such a case of the embodiment of the plurality of stacked reinforcing-fiber substrates, it is preferred that an intermediate layer having a resin flowability higher than that of each reinforcing-fiber substrate is disposed relatively to the plurality of reinforcing-fiber substrates, and a part of the intermediate layer faces the above-described space for injected-resin transit passage. Namely, it is a structure disposing a material with a better resin flowability than a surface layer side, for the intermediate layer. This flowability is generally defined as a permeability using Darcy's law, and it can be determined by examination. In this structure wherein a material with a good flowability is disposed for the intermediate layer, since the resin flowed into the intermediate layer from the space for injected-resin transit passage flows in the layer more quickly than in the reinforcing-fiber substrates stacked on both sides thereof, a part of the resin flowing in the intermediate layer flows from the intermediate layer to the surface layer sides in the thickness direction of the substrate, and resin flows from the intermediate layer to the surface layer sides are formed. This resin flow toward the substrate surface side is likely to press the surface layer side of the stacked body of the plurality of reinforcing-fiber substrates toward the inner surface of the molding die, and by this pressing, the resin-rich part at the substrate surface layer side is further reduced, and therefore, it becomes possible to expect a more excellent design property of the surface of a molded article.

Further, in the present invention, in case where the above-described molding die comprises a double-sided die, it is preferred that the thickness of a cavity is set at a predetermined thickness decided in advance. Where, the "predetermined thickness decided in advance" substantially means a target thickness of molded article. In the method according to the present invention, as described above, because a depression is hardly generated at a section directly below the injection port, even in the state of the reinforcing-fiber substrate immediately before the resin impregnation and even in the state after the resin impregnation, a target shape with no depression on the surface can be easily maintained, and if the thickness of the cavity is simply set at a target predetermined thickness of a molded article, both the state of the reinforcing-fiber substrate during the resin injection and the state of the molded article after the injection and curing of the resin can be maintained at desirable states.

Further, in the present invention, because the structure is employed wherein the injected resin is impregnated into the reinforcing-fiber substrate through the above-described space for injected-resin transit passage, the resin sent into the space for injected-resin transit passage is left even after the curing and molding. However, in particular, in case of a molded article having a large area and a relatively complicated shape, in a position within a product area of an article to be molded, there frequently exists a part such as a hole which is required to be cut off after molding. In such a case, the above-described space for injected-resin transit passage can be easily formed at a position within a product area of an article to be molded, for example, at a position within a product area of an article to be molded and at a portion to be cut off after molding, the space for injected-resin transit passage after molding, which is left with cured resin, and the periphery thereof, may be removed as needed, and in case where there is no problem even if it is left as it is, it can be left as it is.

Further, in the present invention, because an effect can also be expected for reducing a resin viscosity at a position directly below the injection port and accompanying therewith for reducing the injection pressure, it is preferred to employ an injection molding using a constant discharge pump rather than a constant pressure pump. The constant discharge pump means a pump which discharges by adjusting the flow rate by the rotational speed and the displacement of the pump, such as a gear pump, an axial piston pump or a plunger pump mounted with a servo motor. Such pumps are excellent in discharge ability at a constant flow rate, on the other hand, have a possibility that when flowing in the interior having a great flow resistance such as in the reinforcing-fiber substrate, the standing up of the back pressure becomes sharp, and therefore, the effect according to the present invention capable of reducing the injection pressure can be exhibited greatly and preferably.

Furthermore, the present invention can be suitably employed for a manufacturing method having a plurality of injection ports. For example, in a die having a plurality of parts directly below injection ports, it is difficult to equalize the thicknesses of a cavity and the fiber volume contents of a reinforcing-fiber stacked body at the parts directly below injection ports, and there is a case where, if there is an injection port relatively easy to be flowed therein, the flow pattern is disturbed, and accompanying therewith, an inconvenience occurs. In order to improve the inconvenience disturbing the flow pattern, although a method for processing and adjusting the die itself can be exemplified, it is not easy in case where the size of the die is large. On the other hand, in the present invention, it can be easily processed in the actual spot.

### Effect according to the Invention

Thus, in the method for manufacturing a fiber-reinforced resin according to the present invention, by forming in advance the space for injected-resin transit passage at a section of the reinforcing-fiber substrate located directly below the injection port, the press down of the surface of the reinforcing-fiber substrate due to the injected resin can be suppressed, the resin layer of the surface is relieved, and it becomes possible to improve the design property of the surface of a molded article while maintaining the excellent productivity.

### Brief explanation of the drawings

[Fig. 1] Fig. 1 is a schematic diagram of an injection port and its vicinity showing a method for manufacturing a fiber-reinforced resin according to an embodiment of the present invention.
[Fig. 2] Fig. 2 is a schematic perspective plan view of a molding die showing an example applying the method shown in Fig. 1 to a multi-point injection method.
[Fig. 3] Fig. 3 is a schematic diagram of an injection port and its vicinity showing a method for manufacturing a fiber-reinforced resin according to another embodiment of the present invention.
[Fig. 4] Fig. 4 is a schematic diagram of an injection port and its vicinity showing a method for manufacturing a fiber-reinforced resin according to a further embodiment of the present invention.
[Fig. 5] Fig. 5 is a schematic diagram of an injection port and its vicinity showing an example of a state before starting of resin injection in a conventional method for manufacturing a fiber-reinforced resin.
[Fig. 6] Fig. 6 is a schematic diagram of an injection port and its vicinity showing an example of a state immediately after starting of resin injection in the method shown in Fig. 5.
[Fig. 7] Fig. 7 is a schematic diagram of an injection port and its vicinity showing an example of a case where the resin is cured after resin injection in the method shown in Fig. 5.

### Embodiments for carrying out the Invention

Hereinafter, the embodiments of the present invention will be explained referring to figures.

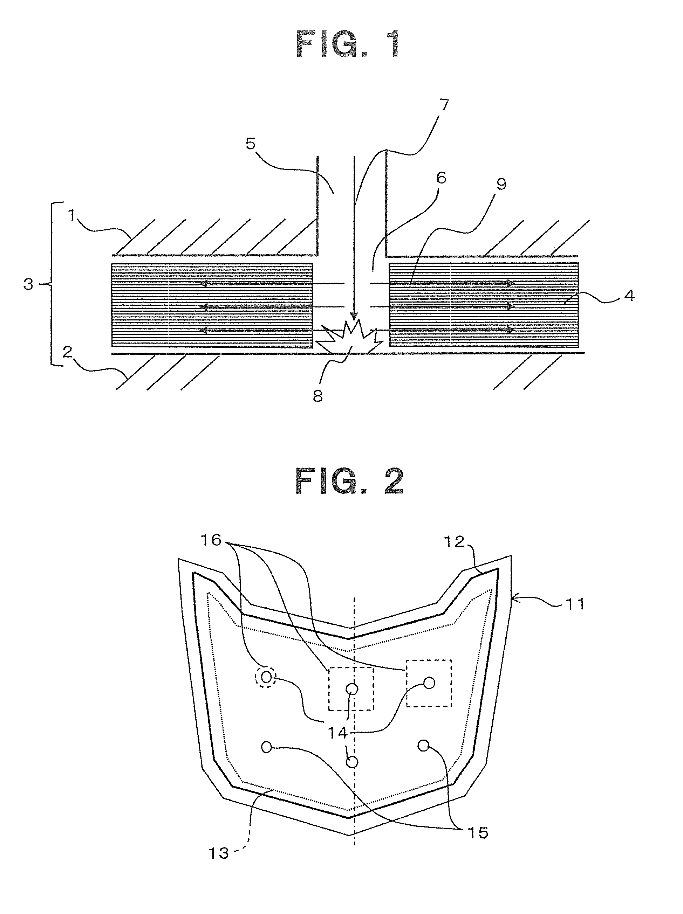

Fig. 1 shows a method for manufacturing a fiber-reinforced resin according to an embodiment of the present invention. A reinforcing-fiber substrate 4, for example, comprising a stacked body of a plurality of reinforcing-fiber materials, is placed in a molding die 3 comprising an upper die 1 and a lower die 2, a resin becoming a matrix resin of a fiber-reinforced resin to be molded is injected from an injection port 5 opened in the upper die 1 in a direction facing one surface of the reinforcing-fiber substrate 4, and the injected resin is impregnated into the reinforcing-fiber substrate 4. By at least partially removing in advance a section of the reinforcing-fiber substrate located directly below injection port 5 in the thickness direction of the reinforcing-fiber substrate, a space for injected-resin transit passage 6 is formed in the reinforcing-fiber substrate 4 in molding die 3. In this embodiment, the space for injected-resin transit passage 6 is formed so as to pass through the reinforcing-fiber substrate 4 in its thickness direction. The resin 7 injected from injection port 5 is impregnated into reinforcing-fiber substrate 4 through this space for injected-resin transit passage 6. In this embodiment, because the space for injected-resin transit passage 6 is formed so as to pass through the reinforcing-fiber substrate 4, the resin 7 injected from injection port 5 does not collide directly with the reinforcing-fiber substrate 4 in the initial flow immediately after being injected, it collides with the inner surface of lower die 2 (collision part 8), and the power of the injected resin 7 is reduced. The resin 7 injected from injection port 5 into the space for injected-resin transit passage 6 is being impregnated from the space for injected-resin transit passage 6 into the reinforcing-fiber substrate 4 as shown by resin flows 9.

In the above-described method, since the space for injected-resin transit passage 6 having a through hole form is formed at a section of the reinforcing-fiber substrate 4 directly below the injection port 5, the resin 7 having been injected from the injection port 5 is first injected into the space for injected-resin transit passage 6, and therefrom impregnated into the reinforcing-fiber substrate 4, the initial collision of the resin immediately after being injected from the injection port 5 against the surface of the reinforcing-fiber substrate 4 disappears, the press down of the surface of the reinforcing-fiber substrate 4, which had been caused by the collision, is suppressed, and the depression of the surface is suppressed. Further, because the space for injected-resin transit passage 6 is formed as a through hole form, as described above, the injected resin 7 collides with the inner surface of lower die 2, and the power thereof is reduced. Also from this point of view, the press down of the surface of the reinforcing-fiber substrate 4 is further suppressed, and the depression of the surface is further suppressed. Accordingly, a resin-rich layer or a resin-only layer substantially is not formed on the surface at this section. Therefore, the curing shrinkage of resin in the conventional methods, in which a resin layer had been formed at this section, is suppressed. Further, because the depression of the surface is suppressed, the distortion of the arrangement of reinforcing fibers in the surface layer section of the reinforcing-fiber substrate 4, such as one shown in Fig. 6, is also suppressed. As the result of the suppression of the depression of the surface, the suppression of the curing shrinkage of resin and the suppression of the distortion of the arrangement of reinforcing fibers, the surface quality of an article to be molded can be greatly improved, and the design property thereof can be greatly improved.

As aforementioned, the above-described method is effective, in particular, for a case of multi-point injection. Fig. 2 shows an example applying the method shown in Fig. 1 to a multi-point injection method. Symbol 11 indicates a molding die, symbol 12 indicates a seal line at the time of molding, and symbol 13 indicates an outline of a product to be molded in a cavity. Although a reinforcing-fiber substrate is placed in this cavity and the injection of resin and the molding of a fiber-reinforced resin are performed, a plurality of injection ports 14 opened in a direction facing the surface of the reinforcing-fiber substrate are provided at appropriate positions of the molding die, and in this embodiment, in order to inject resin reducing in pressure the interior of the cavity by suction, a plurality of suction ports 15 are provided at appropriate positions different from the positions of the injection ports 14. Although it is preferred that injected-resin transit passages each similar to that shown in Fig. 1 are formed for all the injection ports 14, the injected-resin transit passages may be formed only for necessary injection ports 14, or an embodiment may be employed wherein the injected-resin transit passage is not formed for a specified injection port 14 and the injected-resin transit passages are formed only for the remaining injection ports 14. By thus applying the present invention to a multi-point injection case, the depression of the surface, the curing shrinkage of resin and the distortion of the arrangement of reinforcing fibers, which may have been plurally caused in the conventional methods, are suppressed, the surface quality of a molded article can be greatly improved, and the design property thereof can be greatly improved.

Further, in the example shown in Fig. 2, cut-off parts 16 are set at sections corresponding to those around specified injection ports within a product area of the molded article, the interiors of the cut-off parts 16 are removed from the molded article, and the space parts after the removal are utilized for attachment of additional members or adjustment relative to other members. Therefore, if the spaces for injected-resin transit passage are formed within the ranges of these cut-off parts 16, the parts composed of only resin after molding, which are left in the spaces for injected-resin transit passage, are removed from the molded article accompanying with the cut off. Of course, in case where the parts composed of only resin may be left, they may be left as they are. Employing which molding manner may be decided in accordance with the specification required for the molded article.

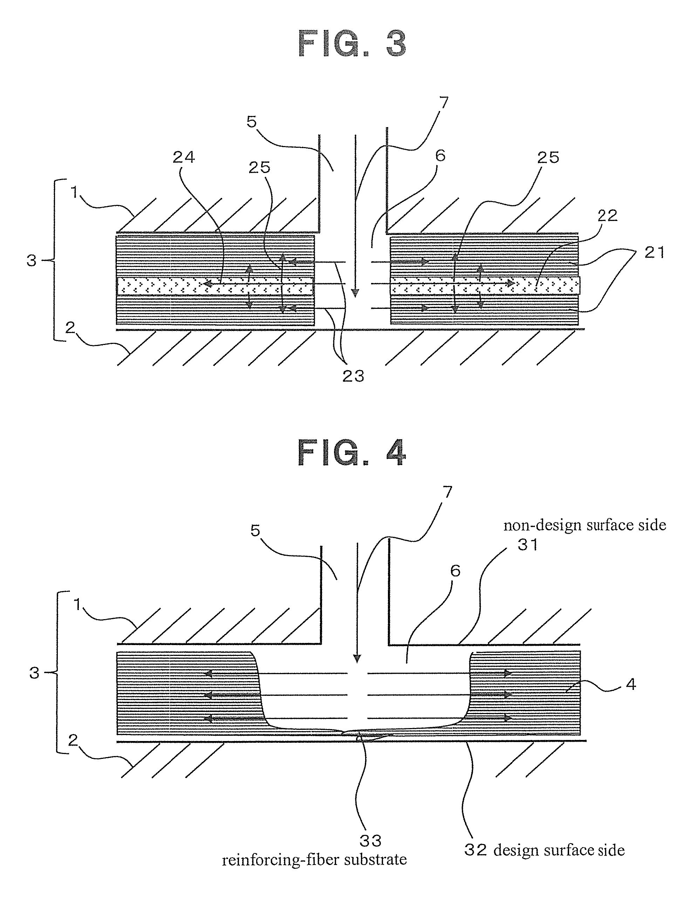

Fig. 3 shows a method for manufacturing a fiber-reinforced resin according to another embodiment of the present invention. In this embodiment, an intermediate layer 22 having a resin flowability higher than that of a reinforcing-fiber substrate 21 is disposed in the reinforcing-fiber substrate 21 comprising a stacked body of a plurality of reinforcing-fiber materials. In such an embodiment wherein the intermediate layer 22 high in flowability is disposed, the resin 7 injected into the space for injected-resin transit passage 6 is flowed from the space for injected-resin transit passage 6 into both the reinforcing-fiber substrate 21 and the intermediate layer 22 (resin flows 23 and 24), and because the resin 24 flowed into the intermediate layer 22 flows in the layer more quickly than in the layers of the reinforcing-fiber substrate 21 stacked on both sides thereof, a part of the resin flowing in the intermediate layer 22 flows from the intermediate layer 22 toward the surface layer sides of the substrate in the thickness direction of the substrate, and forms resin flows 25 from the intermediate layer 22 toward the surface sides of the substrate. Since the resin flows 25 toward the surface sides of the substrate are likely to press the surface layer sides of the stacked body of the plurality of the reinforcing-fiber substrates to the inner surfaces of the molding die 3, by this pressing, the resin-rich parts of the surface layer sides of the substrate are reduced over a wide range, and a further excellent design property of the surface of a molded article can be realized. The other structures, operations and effects are proportionate to the aforementioned embodiment shown in Fig. 1.

Fig. 4 shows a method for manufacturing a fiber-reinforced resin according to a further embodiment of the present invention. In this embodiment, in the molding having a non-design surface side 31 and a design surface side 32, it is preferred that a reinforcing-fiber substrate 33 is left on the design surface side 32 as a continuous layer, because the advantages according to the present invention can be obtained while the quality of the design surface side (a cloth pattern) is maintained. Although the number of the continuous layers can be appropriately selected in order to obtain a desirable quality, it does not restrict the stacking structure at all. The other structures, operations and effects are proportionate to the aforementioned embodiment shown in Fig. 1.

Where, in the present invention, the reinforcing fibers of the used reinforcing-fiber substrate are not particularly restricted, carbon fibers, glass fibers, aramide fibers, and a combination of these reinforcing fibers, can be used for the substrate. Further, also with respect to the form of the substrate, an arbitrary form, such as a woven fabric, a form arranging reinforcing fibers in one direction, a stacked body thereof, can be employed. Furthermore, the matrix resin of the fiber-reinforced resin also is not particularly restricted, and although a thermosetting resin and a thermoplastic rein can be both employed, the present invention is particularly effective for a case where curing shrinkage of resin is liable to occur, and further, for a case where a multi-point injection method is used.

### Industrial Applications of the Invention

The present invention can be applied to manufacture of substantially any fiber-reinforced resin, and in particular, it is suitable for a case where a good design property is required for a surface of a molded article.

### Explanation of symbols

1: upper die
2: lower die
3: molding die
4, 21: reinforcing-fiber substrate
5: injection port
6: space for injected-resin transit passage
7: injected resin
8: collision part
9, 23: resin flow into reinforcing-fiber substrate
11: molding die
12: seal line
13: outline of product to be molded
14: injection port
15: suction port
16: cut-off part
22: intermediate layer
24: resin flow into intermediate layer
25: resin flow from intermediate layer toward surface side of substrate
31: non-design surface side
32: design surface side
33: continuous layer of reinforcing-fiber substrate

## Claims

1. A method for manufacturing a fiber-reinforced resin in which resin is injected into a reinforcing-fiber substrate placed in a molding die from an injection port opened in a direction facing a surface of said reinforcing-fiber substrate, and said resin is then impregnated into said reinforcing-fiber substrate, **characterized in that** a space for injected-resin transit passage is formed in said reinforcing-fiber substrate in said molding die by at least partially removing in advance a section of said reinforcing-fiber substrate located directly below said injection port in a thickness direction of said reinforcing-fiber substrate, and said resin injected from said injection port is impregnated into said reinforcing-fiber substrate through said space for injected-resin transit passage.

2. The method for manufacturing a fiber-reinforced resin according to claim 1, wherein said space for injected-resin transit passage is formed so as to pass through said reinforcing-fiber substrate in said thickness direction of said reinforcing-fiber substrate.

3. The method for manufacturing a fiber-reinforced resin according to claim 1 or 2, wherein an area of said space for injected-resin transit passage in a surface direction of said reinforcing-fiber substrate is an opening area of said injection port toward an interior of said molding die or more.

4. The method for manufacturing a fiber-reinforced resin according to claim 1 or 2, wherein an area of said space for injected-resin transit passage in a surface direction of said reinforcing-fiber substrate is less than an opening area of said injection port toward an interior of said molding die.

5. The method for manufacturing a fiber-reinforced resin according to any of claims 1 to 4, wherein a plurality of injection ports are opened, and said space for injected-resin transit passage is formed relatively to at least one injection port.

6. The method for manufacturing a fiber-reinforced resin according to any of claims 1 to 5, wherein said space for injected-resin transit passage is formed relatively to a plurality of stacked reinforcing-fiber substrates.

7. The method for manufacturing a fiber-reinforced resin according to claim 6, wherein an intermediate layer having a resin flowability higher than that of each reinforcing-fiber substrate is disposed relatively to said plurality of reinforcing-fiber substrates, and a part of said intermediate layer faces said space for injected-resin transit passage.

8. The method for manufacturing a fiber-reinforced resin according to any of claims 1 to 7, wherein said molding die comprises a double-sided die, and a thickness of a cavity is set at a predetermined thickness decided in advance.

9. The method for manufacturing a fiber-reinforced resin according to any of claims 1 to 8, wherein said space for injected-resin transit passage is formed at a position within a product area of an article to be molded.

10. The method for manufacturing a fiber-reinforced resin according to any of claims 1 to 9 wherein a method of impregnating resin into said reinforcing-fiber substrate is a constant discharge method.
